# EUROPEAN PATENT APPLICATION

(11) **EP 4 082 905 A1**
(43) Date of publication of application: **02.11.2022**
(21) Application number: 22167164.7
(22) Date of filing: 07.04.2022
(51) Int. Cl.: B64C 29/00, B64D 37/30, B64D 37/04

(54) **FLIGHT VEHICLE**

(30) Priority: 28.04.2021 JP 2021076662
(71) Applicant: TOYOTA JIDOSHA KABUSHIKI KAISHA, Toyota-shi, Aichi-ken, 471-8571 (JP)
(72) Inventor: KANEKO, Tomohiko, Toyota-shi, 471-8571 (JP)
(74) Representative: J A Kemp LLP

(57) **Abstract**

Provided is a flight vehicle (10) that makes it possible to improve the safety of its passengers. The flight vehicle (10), which includes a fuel cell system, includes a fuselage part (1) including a cabin. The fuel cell system includes at least one fuel gas tank (4), and a lower end of the fuel gas tank stands below a lower end of the fuselage part.

## Description

### FIELD

The present application relates to a flight vehicle.

### BACKGROUND

In recent years, progress has been made in developing a flight vehicle provided with a fuel cell system. A fuel gas tank in a fuel cell system is a relatively large member. Thus, various studies have been made on where to dispose the fuel gas tank.

For example, Patent Literature 1 discloses that a fuel gas tank is disposed to form a section of an external skin of an aircraft. Patent Literature 2 discloses that a water tank for fuel reforming is provided anywhere under the floor of an airframe, in a ceiling space thereof, or in a center wing. Patent Literature 3 discloses that fuel gas tanks are housed in an airstair envelope.

### CITATION LIST

### Patent Literature

Patent Literature 1: JP 2011-506186 A
Patent Literature 2: JP 2003-176729 A
Patent Literature 3: JP 2015-530951 A

### SUMMARY

### Technical Problem

The impact made on a cabin in a flight vehicle when the flight vehicle makes an emergency landing or crashes is strong. Thus, there is a room for improvement in the safety of its passengers.

In view of the above circumstances, a main object of the present application is to provide a flight vehicle that makes it possible to improve the safety of its passengers.

### Solution to Problem

As one aspect to solve the above problem, the present disclosure provides a flight vehicle including a fuel cell system, the flight vehicle comprising: a fuselage part including a cabin, wherein the fuel cell system includes at least one fuel gas tank, and a lower end of the fuel gas tank stands below a lower end of the fuselage part.

In the flight vehicle, the fuel gas tank may be disposed to stand so as not to prevent lift for the flight vehicle from being generated. The fuel gas tank may be in close contact with the fuselage part so that heat conduction can be performed. Further, the fuel gas tank may include a tank valve configured to control opening and closing of the fuel gas tank, the tank valve may include a sealing member thereinside, and the flight vehicle may include a cover covering the tank valve.

### Advantageous Effects

In the flight vehicle according to the present disclosure, the lower end of the fuel gas tank stands below the lower end of the fuselage part. This results in the fuel gas tank striking the ground ahead of the fuselage part when the flight vehicle makes an emergency landing or crashes, so that the impact of the striking is absorbed by the fuel gas tank and the impact on the cabin, which is provided in the fuselage part, is diminished. Therefore, the flight vehicle according to the present disclosure makes it possible to improve the safety of its passengers.

### BRIEF DESCRIPTION OF DRAWINGS

Figs. 1A and 1B are simple schematic views of a flight vehicle 10: Fig. 1A is a front view of the flight vehicle 10; and Fig. 1B is a side view of the flight vehicle 10 which focuses on a fuselage part 1 and a fuel gas tank 4; and
Figs. 2A to 2D are schematic views showing ways of arranging the fuel gas tanks 4 when the flight vehicle 10 is provided with a plurality of the fuel gas tanks 4.

### DESCRIPTION OF EMBODIMENTS

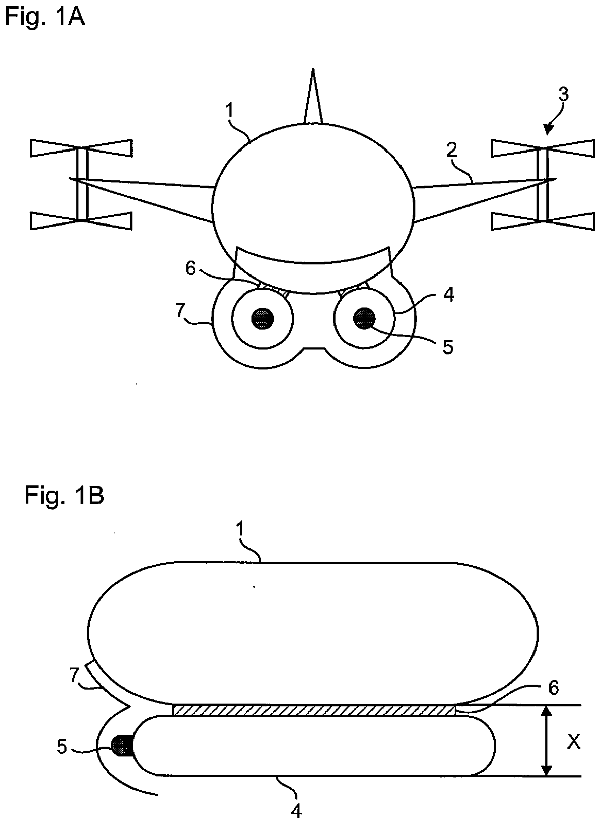

A flight vehicle 10 that is one embodiment will be used to describe a flight vehicle according to the present disclosure. Figs. 1A and 1B are simple schematic views of the flight vehicle 10. Fig. 1A is a front view of the flight vehicle 10. Fig. 1B is a side view of the flight vehicle 10 which focuses on a fuselage part 1 and a fuel gas tank 4. In Fig. 1B, members such as a wing part 2 are transparent for convenience.

The flight vehicle 10 is provided with a fuel cell system. The electric power generated by the fuel cell system is used to drive the flight vehicle 10. The flight vehicle 10 is not particularly limited as long as being a body that can fly in the air. Examples of the flight vehicle 10 include a common aircraft, and aircrafts such as a light aircaft and a drone. Figs. 1A and 1B show the flight vehicle 10 in the form of an aircraft.

The Flight vehicle 10 is provided with the fuselage part 1 including a cabin, and the wing parts 2 disposed so as to protrude from side faces of the fuselage part 1, respectively. Here, "cabin" is a room in which passengers board to stay: passengers here include a pilot. In other words, the meaning of a cabin here encompasses not only a common cabin but also a cockpit. The wing parts 2 are each provided with at least one propeller 3 for generating thrust or lift. In Figs. 1A and 1B, the propellers 3 are arranged so as to align vertically at the tip portion of each of the wing parts 2. Figs. 1A and 1B are merely schematic views of the form of the flight vehicle 10, and the form thereof is not limited thereto. The members of the flight vehicle according to the present disclosure are not particularly limited as long as the flight vehicle has at least a fuselage part including a cabin. The present application may be applied to various kinds of flight vehicles. Examples of such flight vehicles include a light aircaft and a drone.

The fuel cell system provided in the flight vehicle 10 is not particularly limited. A known fuel cell system for a flight vehicle may be employed. For example, the fuel cell system is provided with at least a fuel cell, a fuel gas supply device configured to supply a fuel gas (e.g., hydrogen gas) to the fuel cell, and an oxidant gas supply device configured to supply an oxidant gas (e.g., air) to the fuel cell. Such a structure is the same as that of a general fuel cell system and is known. The fuel cell system is also provided with at least one fuel gas tank 4. In Figs. 1A and 1B, the two fuel gas tanks 4 are disposed below the fuselage part 1. In the fuel gas tanks 4, a fuel gas to be supplied to the fuel cell is stored. Any known fuel gas tanks provided in a flight vehicle may be used as the fuel gas tanks 4. An example of the fuel gas tanks 4 is a fuel gas tank of a cylindrical plastic liner around which a carbon fiber is wound to improve its strength.

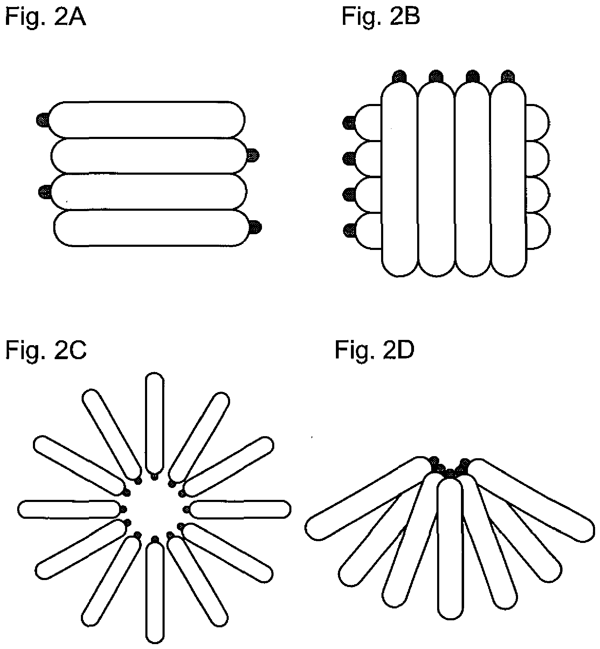

The fuel gas tanks 4 are each provided, at one end thereof, with a tank valve 5 configured to control the opening and closing of the fuel gas tanks 4. The tank valve 5 is provided thereinside with a sealing member for preventing the fuel gas from leaking. The type of the sealing member is not particularly limited, but a known sealing member such as an O-ring may be employed. In Figs. 1A and 1B, the tank valves 5 are disposed to face toward the front side of the flight vehicle 10. The present disclosure is not limited to this. The fuel gas tanks 4 may be arranged in various ways as in Figs. 2A to 2D described later. When a cover 7 to be described later is disposed, the fuel gas tanks 4 are preferably arranged in such a way that the tank valves face toward the front side.

One feature here is that in the flight vehicle 10, the lower ends of the fuel gas tanks 4 stand below the lower end of the fuselage part 1. This results in the fuel gas tanks 4 striking the ground ahead of the fuselage part 1 when the flight vehicle makes an emergency landing or crashes, so that the impact of the striking is absorbed by the fuel gas tanks 4 and the impact on the cabin, which is provided in the fuselage part 1, is diminished. When the flight vehicle lands on the water, the buoyancy of the fuel gas tanks 4 can suppress the sinking of the flight vehicle 10. In flight in normal conditions, the weight of the fuel gas tanks 4 can cause the flight vehicle 10's center of gravity to be low, which thus can result in steady flight. Therefore, the flight vehicle 10 makes it possible to improve the safety of its passengers.

The foregoing effect is achieved as long as the lower ends of the fuel gas tanks 4 stand below the lower end of the fuselage part 1. The lower ends of the fuel gas tanks 4 stand preferably at least 200 mm, and more preferably at least 400 mm below the lower end of the fuselage part 1 (see X in Fig. 1B). This reliably makes it possible that the fuel tanks are in contact with the ground first, which makes it possible to further improve the safety of its passengers. The upper limit is not particularly limited, but, in view of the maneuverability of the flight vehicle 10, the lower ends of the fuel gas tanks 4 are disposed so as to stand at most 800 mm, and preferably at most 600 mm below the lower end of the fuselage part 1.

The fuel gas tanks 4 may be disposed to stand so as not to prevent lift for the flight vehicle 10 from being generated. For example, it is permitted that the fuel gas tanks 4 are not disposed below the propellers 3, which are sources of lift for the flight vehicle 10. This makes it easier to secure lift.

The fuel gas tanks 4 may be disposed at the center in the front direction of the flight vehicle 10. This makes it possible to suppress an increase in the yaw moment of inertia, to hardly prevent the flight vehicle 10 from changing its direction. Here, the center has a 40 to 60% length assuming that the length from one end to the other end is 100% in the width direction in the front direction of the flight vehicle.

Figs. 2A to 2D show preferred ways of arranging the fuel gas tanks 4 when the flight vehicle 10 is provided with a plurality of the fuel gas tanks 4. The ways shown in Figs. 2A to 2D are merely examples. The way of arranging the fuel gas tanks 4 is not limited to them.

Fig. 2A shows a way in which the fuel gas tanks 4 are arranged to alternately face in opposite directions. When the fuel gas tanks 4 face all uniformly, i.e., when the respective tank valves 5 of the fuel gas tanks 4 are aligned in the same direction, the weight of the tank valves 5 may disturb the weight balance of the flight vehicle 10. Therefore, as in Fig. 2A, the fuel gas tanks 4 are arranged to alternately face in opposite directions, which makes it possible to suppress the deterioration of the weight balance of the flight vehicle 10 due to the weight of the tank valves 5.

Fig. 2B shows a way in which an upper group of the fuel gas tanks are arranged so as to be approximately orthogonal to a lower group of the fuel gas tanks which is a plurality of the aligning fuel gas tanks 4. This makes it possible to improve the buoyancy of the fuel gas tanks 4.

Figs. 2C and 2D show a way in which the fuel gas tanks 4 are radially arranged. Fig. 2C is a view observed from above. Fig. 2D is a view observed from the side face side. As in these drawings, the fuel gas tanks 4 are radially arranged in such a way that one ends of the fuel gas tanks 4 are disposed below the other ends, which makes it possible to improve impact absorbability.

Returning to Figs. 1A and 1B, the flight vehicle 10 will be further described. In addition to the safety as described above, the flight vehicle 10 also has the following problem: the compression of the fuel gas leads to a temperature rise in the fuel gas tanks 4 when the tanks are filled with the fuel gas, which brings the problem of reduced filling efficiency followed by a reduced fuel gas capacity.

To avoid this, in the flight vehicle 10, the fuel gas tanks 4 may be in close contact with the fuselage part 1 so that heat conduction can be performed. This makes it possible to transfer the heat of the fuel gas tanks 4 to the fuselage part 1, so that a temperature rise in the fuel gas tanks 4 can be suppressed and thus reduced filling efficiency and a reduced fuel gas capacity can be suppressed, even if the compression of the fuel gas leads to a temperature rise in the fuel gas tanks 4 when the tanks are filled with the fuel gas.

Here, "the fuel gas tanks 4 may be in close contact with the fuselage part 1 so that heat conduction can be performed" means that the fuel gas tanks 4 are in close contact with the fuselage part 1 directly or via thermal conductors 6, and preferably, as in Figs. 1A and 1B, means that the fuel gas tanks 4 are in close contact with the fuselage part 1 via the thermal conductors 6. The thermal conductors 6 may be made from a material having thermal conductivity of 1 to 300 W/m/K. Examples of the material include metals such as iron, copper and aluminum (thermal conductivity: 10 to 300 W/m/K), and thermal greases (thermal conductivity: 1 to 10 W/m/K). The fuel gas tanks 4 are in close contact with the fuselage part 1 via the thermal conductors 6, which makes it possible to increase the contact area between the fuel gas tanks 4 and the fuselage part 1, to improve the heat transferability between the fuel gas tanks 4 and the fuselage part 1.

When the flight vehicle 10 is continuously driven in a cold environment, the sealability of the sealing members provided inside the tank valves 5 deteriorates, which is problematic. The sealing members have a function of preventing the fuel gas from leaking. Thus, the deteriorated sealability of the sealing members may cause the fuel gas to leak.

Thus, the flight vehicle 10 is provided with the cover 7, which covers the tank valves 5. This makes it possible to suppress the cooling of the tank valves 5, to suppress the deterioration of the sealability of the sealing members in the tank valves due to the continuous use of the flight vehicle in a cold environment.

The cover 7 is not particularly limited as long as made from such a rigid material that the wind pressure does not deform the cover 7 when the flight vehicle 10 is driven. Examples of the material include aluminum alloys, glass fibers and carbon fibers. These materials are relatively light in weight, and have the advantage of easy processability and easy attachment.

As in Figs. 1A and 1B, the cover 7 preferably covers the periphery of the tank valves 5. In other words, the cover 7 preferably covers at least part of the tank valves 5 and the fuel gas tanks 4 in a front view of the flight vehicle 10 (or the tank valves 5). More preferably, in a front view of the flight vehicle 10 (or the tank valves 5), the cover 7 covers the entire face of the tank valves 5 and the fuel gas tanks 4 (see Fig. 1A). This makes it possible to further suppress the cooling of the tank valves 5.

As the foregoing, the flight vehicle 10, which is one embodiment, has been used to describe a flight vehicle according to the present disclosure. The flight vehicle 10 according to the present disclosure makes it possible to improve the safety of its passengers.

### Reference Signs List

1 fuselage part
2 wing part
3 propeller
4 fuel gas tank
5 tank valve
6 thermal conductor
7 cover
10 flight vehicle

## Claims

1. A flight vehicle including a fuel cell system, the flight vehicle comprising:
a fuselage part including a cabin, wherein
the fuel cell system includes at least one fuel gas tank, and
a lower end of the fuel gas tank stands below a lower end of the fuselage part.

2. The flight vehicle according to claim 1, wherein the fuel gas tank is disposed to stand so as not to prevent lift for the flight vehicle from being generated.

3. The flight vehicle according to claim 1 or 2, wherein the fuel gas tank is in close contact with the fuselage part so that heat conduction can be performed.

4. The flight vehicle according to any one of claims 1 to 3, wherein
the fuel gas tank includes a tank valve configured to control opening and closing of the fuel gas tank,
the tank valve includes a sealing member thereinside, and
the flight vehicle includes a cover covering the tank valve.
